(19) **Europäisches Patentamt**
**European Patent Office**
**Office européen des brevets**

(11) **EP 4 682 839 A1**

(12) **EUROPEAN PATENT APPLICATION**

(43) Date of publication:
**21.01.2026 Bulletin 2026/04**

(21) Application number: **24188677.9**

(22) Date of filing: **15.07.2024**

(51) International Patent Classification (IPC):
**G06V 10/764** (2022.01)   **G06V 10/80** (2022.01)
**G06V 20/58** (2022.01)   **G06V 10/762** (2022.01)

(52) Cooperative Patent Classification (CPC):
**G06V 20/58; G06V 10/762; G06V 10/764;**
**G06V 10/803**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **aiMotive Kft.**
**1025 Budapest (HU)**

(72) Inventors:
• **MATUSZKA, Tamas**
**1063 Budapest (HU)**
• **SZEGHY, David Peter**
**7100 Szekszárd (HU)**
• **HAJAS, Peter**
**3155 Mátramindszent (HU)**

(74) Representative: **Hofmann, Matthias**
**Boehmert & Boehmert**
**Anwaltspartnerschaft mbB**
**Pettenkoferstraße 22**
**80336 München (DE)**

(54) **METHOD AND SYSTEM FOR OBSTACLE DETECTION**

(57)     The present disclosure relates to a method and system for obstacle detection in autonomous driving. The methods includes: receiving, by a processing module, first road information from a first sensing module; determining, by the processing module, a set of obstacle masks based on the first road information by applying a self-supervised method; receiving, by the processing module, second road information from a second sensing module; determining, by the processing module, a set of clusters based on the second road information by applying an clustering method; and determining, by the processing module, an obstacle based on the set of obstacle masks and the set of clusters.

FIG. 3

EP 4 682 839 A1

**Description**

## TECHNICAL FIELD

The present disclosure is in the field of autonomous driving, in particular a method and system for detecting obstacles.

## BACKGROUND

Autonomous driving technologies have advanced significantly over recent years, with the goal of creating vehicles capable of navigating complex environments without human intervention. A critical component of autonomous driving systems is the ability to accurately detect and classify obstacles in the vehicle's path. This capability ensures the safety and reliability of the autonomous vehicle by allowing it to make informed decisions and avoid potential hazards.

Recent autonomous driving perception modules rely on supervised learning with fixed categories. Therefore, general obstacles not included in the predefined category set cannot be detected by current perception solutions. Due to the variability and the large number of edge cases, general obstacle detection cannot be solved by supervised learning, and open-world detection is required.

Liu, Shilong & Zeng, Zhaoyang & Tianhe, Ren & Li, Feng & Yang, Jie & Li, Chunyuan & Yang, Jianwei & Su, Hang & Zhu, Jun & Zhang, Lei. (2023). Grounding DINO: Marrying DINO with Grounded Pre-Training for Open-Set Object Detection present an open-set object detector, called Grounding DINO, by marrying Transformer-based detector DINO with grounded pre-training, which can detect arbitrary objects with human inputs such as category names or referring expressions.

Kirillov, Alexander et al. "Segment Anything." 2023 IEEE/CVF International Conference on Computer Vision (ICCV) (2023): 3992-4003 introduce the Segment Anything (SA) project: a new task, model, and dataset for image segmentation.

Joseph, K & Khan, Salman & Khan, Fahad & Balasubramanian, Vineeth. (2021). Towards Open World Object Detection propose a novel computer vision problem called: "Open World Object Detection', where a model is tasked to: 1) identify objects that have not been introduced to it as 'unknown', without explicit supervision to do so, and 2) incrementally learn these identified unknown categories without forgetting previously learned classes, when the corresponding labels are progressively received.

## SUMMARY

According to a first aspect of the present disclosure, a method for obstacle detection includes: receiving, by a processing module, first road information from a first sensing module; determining, by the processing module, a set of obstacle masks based on the first road information by applying a self-supervised method; receiving, by the processing module, second road information from a second sensing module; determining, by the processing module, a set of clusters based on the second road information by applying a clustering method; and determining, by the processing module, an obstacle based on the set of obstacle masks and the set of clusters.

In some embodiments, the first sensing module may include an imaging sensor and/or the second sensing module comprises a sensor with depth information.

In some embodiments, the determining, by the processing module, a set of obstacle masks based on the first road information by applying a self-supervised method may include: generating a road surface mask based on the first road information; detecting a set of discontinuous regions on the road surface mask; and determining the set of obstacle masks based on the set of discontinuous regions.

In some embodiments, the method may include when a particular discontinuous region of the set of discontinuous regions is not covered as a whole by the road surface mask, identifying a boundary of the particular discontinuous region.

In some embodiments, the set of clusters may include a set of non-ground clusters and a set of ground clusters and the method may include: determining the set of ground clusters based on the second road information; removing the set of ground clusters from the second road information to obtain remaining second road information; clustering the remaining second road information to obtain the set of non-ground clusters; determining a set of overlapping clusters based on the remaining second road information and the first road information; determining a known obstacle candidate and an unknown obstacle candidate based on the set of non-ground clusters and the set of overlapping clusters by applying a closed-world model; determining a stationary obstacle candidate by building an aggregated road model based on the set of ground clusters; and determining the obstacle based on the known obstacle candidate, the unknown obstacle candidate and the stationary obstacle candidate.

In some embodiments, the determining a set of overlapping clusters based on the remaining second road information and the first road information may include: applying motion compensation to the remaining second road information; constructing the mapping relation between the first road information and the remaining second road information; detecting a set of overlapping regions between the set of obstacle masks and the remaining second road information; and clustering a set of overlapping regions to obtain the set of overlapping clusters.

In some embodiments, the determining a known obstacle candidate and an unknown obstacle candidate based on the set of non-ground clusters and the set of overlapping clusters by applying a closed-world model may include distinguishing between the known obstacle candidate and the unknown obstacle candidate.

In some embodiments, the determining a stationary obstacle candidate by building an aggregated road model based on the set of ground clusters may include: classifying the set of ground clusters into a set of road clusters and a set of non-road clusters by applying an image segmentation model; building an aggregated road model based on the set of road clusters and the road surface mask; detecting a set of abnormal clusters based on the aggregated road model; and determining the stationary obstacle candidate based on the set of abnormal clusters.

In some embodiments, the determining the obstacle based on the known obstacle candidate, the unknown obstacle candidate and the stationary obstacle candidate may include combining and/or unifying the known obstacle candidate, the unknown obstacle candidate, and the stationary obstacle candidate to obtain the obstacle.

In some embodiments, the method may include generating a 3D bounding shape for the obstacle, wherein the generation is based on a position property, and/or geometry property, and/or a time property of the obstacle.

According to the second aspect of the present disclosure, A system for obstacle detection includes: a first sensing module configured to generate first road information; a second sensing module configured to generate second road information; and a processing module. The processing module is configured to: receive first road information from a first sensing module; determine a set of obstacle masks based on the first road information by applying a self-supervised method; receive second road information from a second sensing module; determine a set of clusters based on the second road information by applying a clustering method; and determine an obstacle based on the set of obstacle masks and the set of clusters.

In some embodiments, the processing module may be further configured to determine a set of ground clusters based on the second road information; remove the set of ground clusters from the second road information to obtain remaining second road information; cluster the remaining second road information to obtain a set of non-ground clusters; determine a set of overlapping clusters based on the remaining second road information and the first road information; determine a known obstacle candidate and an unknown obstacle candidate based on the set of non-ground clusters and the set of overlapping clusters by applying a closed-world model; determine a stationary obstacle candidate by building an aggregated road model based on the set of ground clusters; and determine the obstacle based on the known obstacle candidate, the unknown obstacle candidate and the stationary obstacle candidate.

In some embodiments, the processing module may be further configured to apply an open world model on the unknown obstacle candidate.

Conventional segmentation networks cannot be used for detecting unknown categories lying on the road surface. Furthermore, computational geometry-based outlier detection is sensitive to sensor noise. However, combining these two separate fields can result in reliable general obstacle detection. Foundational models can avoid the time-consuming and expensive training phase. These models can provide outlier patches on the road surface mask with appropriate prompt engineering. This way, the obstacle masks can be obtained in a zero-shot manner. The computational geometry-based object detection does not require training any models either. Therefore, embodiments of the present disclosure provide an unsupervised 3D automatic annotation method.

These and other features, aspects, and advantages will be apparent from a reading of the following detailed description and a review of the associated drawings. It is to be understood that both the foregoing general description and the following detailed description are explanatory and do not restrict aspects as claimed.

## BRIEF DESCRIPTION OF THE DRAWINGS

The present disclosure is further described in terms of exemplary embodiments. These exemplary embodiments are described in detail with reference to the drawings. The drawings are not drawn to scale. These embodiments are non-limiting exemplary embodiments, in which like reference numerals represent similar structures throughout the several views of the drawings, and wherein:

FIG. 1 is a schematic diagram of an exemplary system 100 for obstacle detection according to some embodiments of the present disclosure.
FIG. 2 is a flowchart illustrating an exemplary process for obstacle detection according to some embodiments of the present disclosure.
FIG. 3 is a flowchart illustrating an exemplary process for general obstacle detection method according to some embodiments of the present disclosure.
FIG. 4 is a schematic diagram of an exemplary obstacle detection methods functional separation according to some embodiments of the present disclosure.
FIG. 5 is a block diagram illustrating an exemplary general obstacle detection module according to some embodiments of the present disclosure.

## DETAILED DESCRIPTION

Embodiments of the present disclosure can be considered a subset of open-world detection and can be solved in 3D by combining foundational models and computational geometry. Preferably, the localization of unknown instances (i.e., obstacles) is part of the problem scope while learning the class for unknown categories is not. Without requiring an oracle to label unknown objects for classifying them into concrete categories, embodiments in accordance with present disclosure can determine existence of obstacles.

Two main components are foundational model-based obstacle segmentation and computational geometry-based outlier detection. The foundational model may be a self-supervised model. For example, Grounding DINO can be used for outputting the 2D bounding box of the road surface, which is further utilized by the Segment Anything Model (SAM) as a prompt. The holes on the road surface mask found by SAM are possible obstacles. The computational geometry method may include an unsupervised method. For example, using these obstacle masks, the outliers found by the computational geometry method can be flagged as general obstacles by projecting 3D points onto the masks, resulting in 3D bounding boxes.

The following description is presented to enable any person skilled in the art to make and use the present disclosure and is provided in the context of a particular application and its requirements. Various modifications to the disclosed embodiments will be readily apparent to those skilled in the art, and the general principles defined herein may be applied to other embodiments and applications without departing from the spirit and scope of the present disclosure. Thus, the present disclosure is not limited to the embodiments shown but is to be accorded the widest scope consistent with the claims.

The terminology used herein is for the purpose of describing particular example embodiments only and is not intended to be limiting. As used herein, the singular forms "a," "an," and "the" may be intended to include the plural forms as well, unless the context clearly indicates otherwise. It will be further understood that the terms "comprise," "comprises," and/or "comprising," "include," "includes," and/or "including," when used in this specification, specify the presence of stated features, integers, steps, operations, elements, and/or components, but do not preclude the presence or addition of one or more other features, integers, steps, operations, elements, components, and/or groups thereof.

These and other features, and characteristics of the present disclosure, as well as the methods of operation and functions of the related elements of structure and the combination of portions and economies of manufacture, may become more apparent upon consideration of the following description with reference to the accompanying drawings, all of which form a part of this disclosure. It is to be expressly understood, however, that the drawings are for the purpose of illustration and description only and are not intended to limit the scope of the present disclosure. It is understood that the drawings are not to scale.

The flowcharts used in the present disclosure illustrate operations that systems implement according to some embodiments of the present disclosure. It is to be expressly understood, the operations of the flowchart may be implemented not in order. Conversely, the operations may be implemented in inverted order, or simultaneously. Moreover, one or more other operations may be added to the flowcharts. One or more operations may be removed from the flowcharts.

Also, the functionality described herein as being performed by one component may be performed by multiple components in a distributed manner. Likewise, functionality performed by multiple components may be consolidated and performed by a single component. Similarly, a component described as performing particular functionality may also perform additional functionality not described herein. For example, a device or structure that is "configured" in a certain way is configured in at least that way, but may also be configured in ways that are not listed.

In order to make the purpose, technical solution, and advantages of the present disclosure clearer, the present disclosure will be further described in detail below with reference to the accompanying drawings and embodiments. It should be understood that the specific embodiments described herein are merely illustrative of the present disclosure and are not intended to limit the present disclosure.

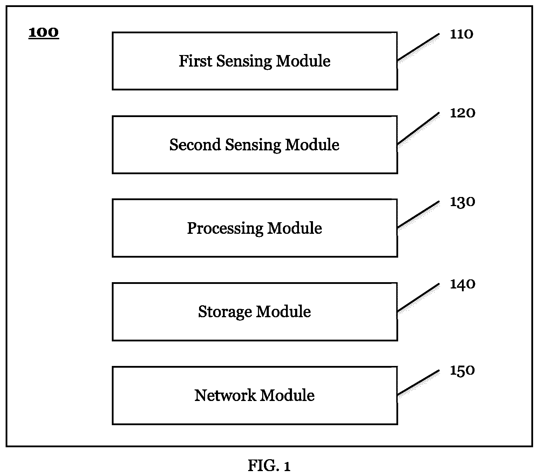

FIG. 1 is a schematic diagram of an exemplary system 100 for obstacle detection according to some embodiments of the present disclosure. As illustrated in FIG.1, the system 100 may include a first sensing module 110, a second sensing module 120, a processing module 130, a storage module 140, a network module 150 and/or any other suitable component for obstacle detection in accordance with various embodiments of the disclosure.

The first sensing module 110 may provide image information of a surrounding environment. In some embodiments, the first sensing module 110 may be installed in a vehicle. The first sensing module 110 may include one or more imaging sensors. For example, a plurality of image sensors may be positioned on the vehicle to cover different fields of view. In some embodiments, the imaging sensor may be any suitable device that is capable of capturing an image of the vehicle's surrounding environment. For example, the imaging sensor may be a monocular camera, a stereo camera, a surround-view camera, or the like, or any combination thereof. The image information may include but not limited to one or more RGB images.

The second sensing module 120 may provide depth information of the surrounding environment. In some embodiments, the second sensing module 120 may be installed in a vehicle. The second sensing module 120 may include one or more sensors with depth information. For example, a plurality of sensors with depth information may be positioned on the vehicle to cover different fields of view. In some embodiments, the sensor with depth information may be any suitable device that is capable of capturing three-dimensional (3D) spatial information of the vehicle's surrounding environment. For example, the sensor with depth information may include a LiDAR, a Radar, an ultrasonic sensor, or the like, or any combination thereof. The depth information may include one or more of 3D point clouds, depth images, intensity images, or the like, or any combination thereof.

In some embodiments, the system 100 may include additional sensors or additional modalities for obtaining additional information. For example, the system 100 may include GPS coordinates for localization. However, the additional information (e.g., localization information) can be obtained directly or calculated implicitly from information generated by the first sensing module 110 and/or the second sensing module 120.

The information generated by the first sensing module 110 or the second sensing module 120 may be stored in the storage module 140, and/or sent to the processing module 130 via the network module 150. In some embodiments, the first sensing module 110 and/or the second sensing module 120 may be connected with the processing module 130 directly.

The processing module 130 may obtain information generated by the first sensing module 110 and the second sensing module 120 or retrieved from any component in the system 100 (e.g., the storage 140). The obtained information may be processed by the processing module 130. For example, the processing module 130 may determine whether an obstacle exists in the environment or scene captured in the obtained information. The processing module 130 may further evaluate the correctness of the determination. In some embodiments, the processing module 130 may be integrated with the first sensing module 110 and/or the second sensing module 120 to form an integrated component that may perform any or all of the functions of the processing module 130, the first sensing module 110 and/or the second sensing module 120. The processing module 130 may generate a command based on the obtained information. For example, the command may be used to control the first sensing module 110 (e.g., a camera) and/or the second sensing module 120 (e.g., a LiDAR) to change its detecting direction, increase detecting frequency, or the like.

The processing module 130 may be any suitable device that is capable of analyzing sensing information (e.g., an RGB image and/or a 3D point cloud) and determining, based on the sensing information, an obstacle in surrounding environments. For example, the image processing device 120 may include a high-performance computing device specializing in data processing, a personal computer, a portable device, a server, a microprocessor, an integrated chip, a digital signal processor (DSP), a tablet computer, a personal digital assistant (PDA), or the like, or a combination thereof. In some embodiments, the processing module 130 may be integrated into a vehicle or a cloud server. Furthermore, the processing module 120 is able to handle postprocess.

The storage module 140 may store sensing information, obstacle information, and related information. The sensing information may include image information obtained from the first sensing module 110, and depth information obtained from the second sensing module 120. The obstacle information may include a feature (e.g., pixel values) related to obstacle (s) (e.g., a hole on the road) in the surrounding environment. The feature may include but not limited to a location feature, an extent feature, an orientation feature, a velocity feature, an acceleration feature, a tracking ID, or the like, or any combination thereof. The related information may include an intrinsic parameter (e.g., beam divergence, filed of view, a focal length, or a lens distortion parameter), and/or an extrinsic parameter (e.g., a position parameter, a rotation parameter), and/or an ego-motion parameter of the sensing modules that generate sensing information.

The network module 150 may facilitate communications between various components of the system 100. The network module 150 may be a wired network of a wireless network. The wired network may include a Local Area Network (LAN), a Wide Area Network (WAN), a ZigBeeTM, or the like, or a combination thereof. The wireless network may include a BluetoothTM, a Near Field Communication (NFC), a wireless local area network (WLAN), Wi-FiTM, a Wireless Wide Area Network (WWAN), or the like, or a combination thereof. The network module 150 may also include various network access points, e.g., wired or wireless access points which a data source may connect to the network module 150 to transmit data via the network module 150.

It should be noted that the description above of the system 100 is provided for the purposes of illustration, and not intended to limit the scope of the present disclosure. For persons having ordinary skills in the art, various variations and modifications may be conducted under the guidance of the present disclosure. However, those variations and modifications shall not depart the scope of the present disclosure. In some embodiments, the storage module 140 may be combined with the sensing module 110 and/or 120, or the processing module 130 as a single device. Similar modifications should fall within the scope of the present disclosure.

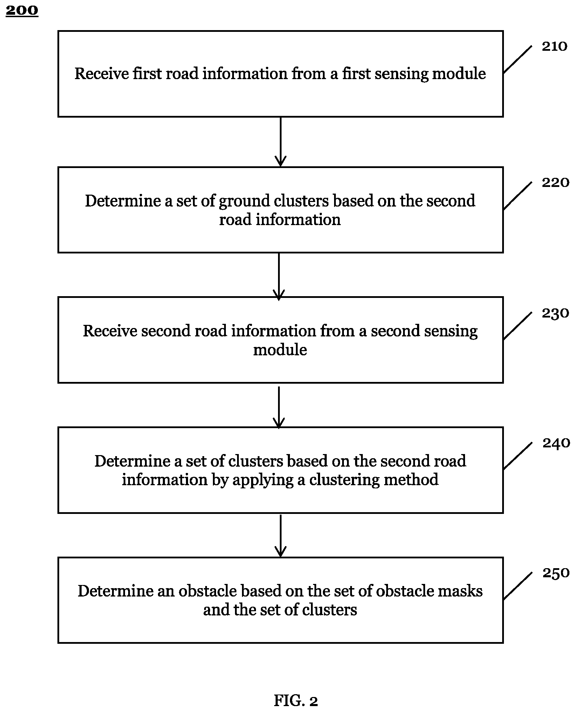

FIG. 2 is a flowchart illustrating an exemplary process for obstacle detection according to some embodiments of the present disclosure. In some embodiments, process 200 may be implemented on the system 100 as illustrated in FIG.1. For example, the process 200 may be stored in a storage medium (e.g., the storage module 140) in the form of instructions, and invoked and/or executed by the processing module 130. The operations in the process 200 presented below are intended to be illustrative. In some embodiments, the process 200 may be accomplished with one or more additional operations not described, and/or without one or more of the operations discussed. Additionally, the order in which the operations of the process200 as illustrated in FIG. 2 and described below are not intended to be limiting.

In 210, the processing module 130 receives first road information from the first sensing module 110. The first sensing module 110 may include one or more imaging sensors, such as cameras. The first road information may include one or more images (e.g., RGB images) and related information of the first sensing module 110. For example, the first road information may include camera frames such as an ordered sequence of camera frames

$$\mathcal{I}_i^j = \{(R, G, B)\}, i = 1, \ldots, N, j = 1, \ldots, N_{cam}$$

where N is the sequence length, and j is the number of cameras. The first road information may also include calibration matrices. Calibration matrices $C = \{(C_I^j, C_{R|t}^j)\}$ may store intrinsic and extrinsic matrices for each camera, respectively, where $C_I^j$ is an intrinsic matrix, $C_{R|t}^j$ is an extrinsic matrix, R is a rotation matrix and t is a translation vector.

In 220, the processing module 130 determines a set of obstacle masks based on the first road information by applying a self-supervised method. The self-supervised method may refer to foundational model-based general obstacle segmentation. Specifically, the processing module 130 may employ foundational models for segmenting general obstacle masks in a per-frame manner.

A straightforward idea is to utilize regular segmentation networks. Unfortunately, this method is unsuitable for general obstacle detection since traditional deep learning-based semantic segmentation methods are trained to classify unknown objects as background. As a result, obstacles lying on the road surface will be misclassified and included by the predicted road surface mask. Open vocabulary detection is also not applicable due to the large variability of the possible detectable obstacles, preventing the application of a fixed list such as ['debris', 'obstacle', 'stuff'].

Foundational models are the next generation of machine learning models. Due to the extensive self-supervised pretraining on a huge amount of unlabeled (and even multimodal) data, these models can generalize across different tasks. Grounding DINO is one of the representatives of foundational models and utilizes grounded pretraining for open-set object detection. Grounding refers to the fine-grained alignment between vision and text, resulting in a promotable object detector. Segment Anything is another foundational model that uses a variety of prompts (e.g., interactive points and boxes) for segmenting objects in images.

In some embodiments, the processing module 130 may generate a road surface mask based on the first road information. The road surface mask may represent a road surface which is identified and isolated from other elements in the environment. Foundational models such as image segmentation model may be used to generate the road surface mask. Then the processing module 130 may detect a set of discontinuous regions on the road surface mask. Discontinuous regions refer to areas on the road surface mask where there are abrupt changes or interruptions, which may be caused by the presence of obstacles. Discontinuous regions may include holes on the road surface mask. This detection can be performed using various image processing techniques, such as edge detection, morphological operations, or analyzing the differences in pixels within the road surface mask. The processing module 130 may further determine the set of obstacle masks (i.e., possible obstacles) based on the set of discontinuous regions. For example, the set of discontinuous regions may be the set of obstacle masks.

In some embodiments, the processing module 130 may detect road surface masks on 2D images and find the discontinuous part of the mask. These "holes" on the road mask can be treated as general possible obstacle. The first road information may include 2D images of the scenario and text information. The text information may be determined based on the scenario manually or automatically. For example, the text information may be a word "road". 2D images and the word "road" may be input prompt for Grounding DINO. The output of Grounding DINO may include a bounding box of the road surface. The next step is to prompt SAM with the output of Grounding DINO. Due to the extensive pretraining process, SAM is able to distinguish between the road surface and even small/distant objects. SAM may detect the set of discontinuous regions on the road surface mask. Thus, the set of obstacle mask can be determined for each frame.

State-of-the-art open vocabulary detectors use general phrases such as 'all objects' to find unknown classes. The present disclosure can approach the problem from the opposite direction due to the large variability between the semantics of the unknown objects.

In some embodiments, the set of obstacle masks may require a postprocess. When a particular discontinuous region of the set of discontinuous regions is not covered as a whole by the road surface mask, the system 100 (e.g., the processing module 130) may identify a boundary of the particular discontinuous region. In other words, there is a postprocess to handle objects not entirely covered by the road mask (e.g., obstacles close to the horizon). The postprocess may include but not limited to convex hull calculation, alpha shape calculation, morphological operations, or the like, or any combination thereof. In some embodiments, the obstacle segmentation can even be further improved by 2D tracking. Despite the broad capabilities of foundational models, some false positive detections still can be found that will later be eliminated by following steps.

In 230, the processing module 130 receives second road information from a second sensing module. The second sensing module may include one or more sensors with a depth information, such as LiDAR, radar. The second road information may include point clouds.

For example, the second information may include an ordered sequence of orderless LiDAR point cloud $\{p_i \in \mathbb{R}^{n_p \times C}\}, i = 1, ..., N$, where $n_p$ is the number of points corresponding to the $i^{th}$ frame and C represents LiDAR point characteristics such as 3D location and additional information (e.g., intensity, timestamp). Each point cloud may contain the environment as well as dynamic and static obstacles. The second road information may further include ego-motion information. For example, the ego-motion information can be computed using the LiDAR measurements. $\{\mathcal{M}_i = [R_i|t_i]\}, i = 1, 2, ..., N$ may be known sensor poses storing the ego-motion.

In 240, the processing module 130 determines a set of clusters based on the second road information by applying a clustering method. The set of clusters may include a set of non-ground clusters and a set of ground clusters. The set of non-ground clusters may contain points representing non-ground area. The set of ground clusters may contain points representing ground area. The clustering method may include an unsupervised method.

In some embodiments, the clustering method may include a plurality of unsupervised methods. For example, the following methods may be used in combination for segmenting into clusters (the clustering method): custom unsupervised method on every region, DBSCAN (Density-Based Spatial Clustering of Applications with Noise) in the distant region, supervised neural network, and unsupervised algorithm to synthesize the above. With the unsupervised method, an extensive training is not required for detecting unknown obstacles in 3D, which reduces the computational resources and time required for model development and enhances the system's ability to adapt to new environments and obstacle types.

In some embodiments, the processing module 130 determines a set of ground clusters based on the second road information. LiDAR point segmentation can be used to detect per frame ground points. The set of ground clusters may be obtained by clustering ground points.

After determining the set of ground clusters, the processing module 130 may remove the set of ground clusters from the second road information to obtain remaining second road information. For example, the remaining second road information may include a set of non-ground clusters, which may contain obstacles to be determined. After removing the set of ground clusters, the set of non-ground clusters can be kept for the following steps.

The processing module 130 may cluster the remaining second road information to obtain a set of non-ground clusters. Specifically, the per frame point cloud is segmented into clusters after removing the detected ground points to obtain per frame clusters. Because each obstacle may exist in the surrounding environment for a long time, the per frame clusters can be matched and tracked in consecutive frames, resulting in an aggregated point cloud for each possible object existing in the second road information (e.g., LiDAR point clouds). And these possible objects can appear in the perceived world for their whole lifetime and are usually seen from different viewpoints by the LiDAR. Each aggregated point cloud may be each of the set of non-ground clusters.

It should be understood that the set of non-ground clusters can be determined based on the second road information. To ensure robustness for obstacle detection, the processing module 130 may determine a set of overlapping clusters based on the first road information and the second road information, in particular, the remaining second road information and the set of obstacle masks. Due to dynamic environments, motion compensation is required to ensure an accurate time and spatial reference. After motion compensation, a mapping relation between the remaining second road information (e.g., points of the LiDAR frames) and the first road information is constructed. Specifically, the points of the LiDAR frames (after motion compensations) are projected back to the closest image in time. Due to the existence of the set of obstacle masks, a set of overlapping regions between the set of obstacle masks and the remaining second road information can be detected. Specifically, the projected LiDAR points belonging to the set of obstacle masks computed by foundational models determine candidate clusters in the point cloud frame. The set of overlapping regions can be clustered to obtain the set of overlapping clusters. The set of overlapping clusters may include possible objects shown in both the first road information (e.g., images) and the second road information (e.g., point clouds). Thus, these clusters can be analysed and filtered to suppress false positive detections mentioned in step 220. Analysing and filtering is made based on geometry: too large and too small possible objects are potentially misclassifications; and inconsistent, unstable detections are filtered.

After obtaining the set of non-ground clusters and the set of overlapping clusters, the processing module 130 may determine a known obstacle candidate and an unknown obstacle candidate based on the set of non-ground clusters and the set of overlapping clusters by applying a closed-world model. After the matching-tracking method described above, the set of non-ground clusters and the set of overlapping clusters may include known obstacle candidates (i.e., objects in known categories) and unknown obstacle candidates (i.e., objects cannot be classified into a known category). The known obstacle candidate and the unknown obstacle candidate can be distinguished according to a recognition result of the closed-world model. Specifically, with the help of the output of a conventional image segmentation NN (Neural Network, such as Mask2Former), these obstacle candidates can be classified into a predefined list of categories.

In this way, closed-set object detection has been executed. In some embodiments, further analysis and open-world detection may be applied on the unknown obstacle candidate. For example, this further analysis results in unknown obstacle candidate can be kept based on the following properties: position relative to the road, geometric properties (extent), and/or time properties (has a long enough lifetime).

Following the above steps, obstacle candidates on the non-ground clusters are determined. There may be other obstacle candidates on the ground. To ensure the accuracy of the obstacle detection, the processing module 130 may determine a stationary obstacle candidate by building an aggregated road model based on the set of ground clusters. The set of ground clusters are grouped into a set of road clusters and a set of non-road clusters by applying an image segmentation model. Then an aggregated road model is built based on the set of road clusters and the road surface mask. Specifically, with the help of the extracted road surface mask computed in step 220, a world model of the road can be built using the set of road clusters (e.g., road points of all the LiDAR frames). The stationary obstacle candidate may include small and static obstacles. These obstacles may not be detected by the self-supervised method and the closed world detector. These small objects can be clustered to the road and appear as a higher deviation region of the road surface points. Thus, a set of abnormal clusters can be detected based on the aggregated road model. For example, the processing module 130 may detect the set of abnormal clusters, such as out-of-distribution clusters, on the road surface using statistical data analysis. The statistical data analysis may include processing the points locally and with their neighborhood, fitting non-linear plane, considering deviation, thresholding. Furthermore, the stationary obstacle candidate is determined based on the set of abnormal clusters. The stationary obstacle candidate may include small and static obstacles. The set of abnormal clusters yield trackable static objects (bumps, holes included) on the road missed by the obstacle segmentation output by foundational models (applied in step 220).

In step 250, the processing module 130 determines an obstacle based on the set of obstacle masks and the set of clusters. In some embodiments, the determination may be based on the known obstacle candidate, the unknown obstacle candidate and the stationary obstacle candidate. For example, the processing module 130 may combine and/or unify the known obstacle candidate, the unknown obstacle candidate, and the stationary obstacle candidate to obtain the obstacle.

Steps 240 and 250 may include unsupervised object detection using computational geometry algorithms and tracking, which relies on computational geometry and tracking algorithms. The input for this phase can be obtained from three different sources (closed-world object annotator, computational geometry and road surface reconstruction and obstacle detection).

Furthermore, the system 100 may generate a 3D bounding shape for the obstacle. In some embodiments, a post-processing step may be needed since the tracked obstacle on the road surface can be detected from several sources (e.g., the known obstacle candidate, the unknown obstacle candidate and the stationary obstacle candidate). This post-process step may be a statistical postprocessing, where the detections coming from the three different sources are combined, and unified. This post-process step can be responsible for an entity resolution method to handle multiple detections found by different methods. In some embodiments, the system 100 can output 3D bounding boxes for closed-set categories and unknown general obstacles in an offline manner utilizing past and future measurements. The generation may be based on several properties of the obstacle. For example, this further analysis results in an unknown obstacle can be kept based on the following properties: position relative to the road, geometric properties (extent), and/or time properties (has a long enough lifetime).

In some embodiments, an unknown obstacle may refer to an unlabeled dataset $\mathcal{D}_{\mathcal{UL}}$. Considering the unlabeled dataset $\mathcal{D}_{\mathcal{UL}} = (\mathcal{P}, \mathcal{I}, \mathcal{C}, \mathcal{M})$, the system 100 may output amodal bounding boxes $B_k = \{b_k\}$, $k = 1, ..., n_b$. The amodal bounding box can represent the full extent of the object as if it were completely visible, even though portions of it may be hidden behind other objects or cut off by the edges of the image. A $b_k = (x, y, z, w, h, l, \theta, v, a, id, c)$ 3D bounding box is parameterized by its 3D location $(x, y, z, w, h)$, extent $(l)$, orientation $(\theta)$, velocity $(v)$, acceleration $(a)$, and a unique, consistent track ID $(id)$ within the $N$ frames. The parameter c denotes the obstacle class ID. It should be noted that the c is not necessarily contained by the closed label set of any pretrained 3D object detection NN (Neutral Network) trained using supervised learning.

In some embodiments, to avoid false negative detections, the system 100 may predict the depth of the obstacle based on the local information of the image patch and nearby LiDAR point projections corresponding to the ground. This situation may happen when the ego-car does not come closer than 50 meters to the obstacle, so that the LiDAR cannot recognize obstacles made from non-reflective materials. From a collision avoidance perspective, this may not be a problem since the ego-trajectory never intersects with the obstacle. However, this may result in false negative detections considering the perception objective. In this case, the foundational model-based segmentation may only detect existence of an obstacle. The system 100 may combine image features and LiDAR points to predict the depth of the obstacle.

It should be noted that the present disclosure can be built into a DAA (Dynamic Auto-Annotation) pipeline. This pipeline can be responsible for generating 3D bounding boxes of the dynamic objects of predefined categories in an automated manner. The proposed method may extend DAA's output with general obstacles not included in the predefined categories.

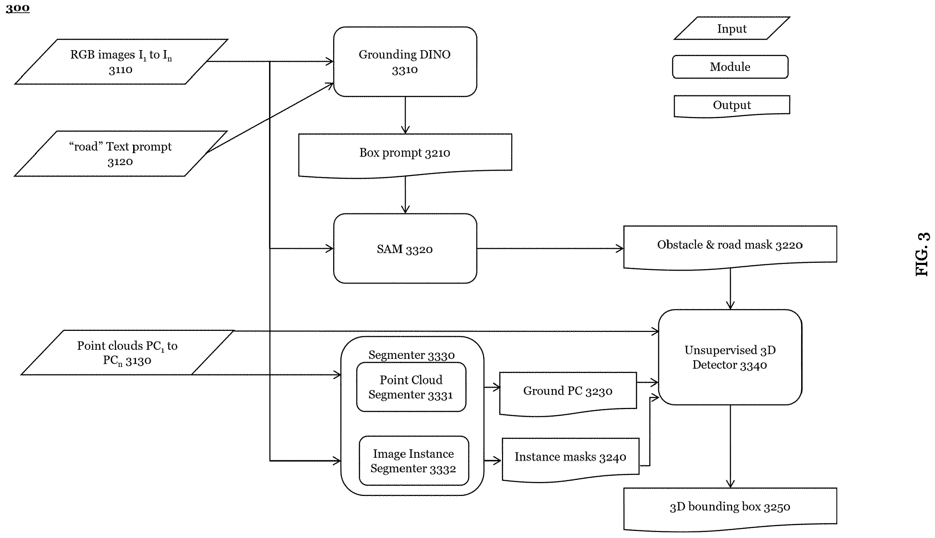

FIG. 3 is a flowchart illustrating an exemplary process for general obstacle detection method according to some embodiments of the present disclosure. The obstacle detection may be achieved by combining results from foundational models and segmenters as an input of an unsupervised method. The system 100, especially the processing module 130, can execute the process in FIG. 3.

Foundational models: the processing module 130 can receive RGB images $I_1$ to $I_n$ 3110 from the first sensing module 110 (e.g., camera), which is an input of the foundational models, such as Grounding Dino 3310 or SAM (Segment Anything Model) 3320. Specifically, Grounding DINO 3310 is able to output the 2D bounding box of the road surface. SAM 3320 is able to distinguish between the road surface and objects.

In some embodiments, RGB images 3110 and text prompts 3120 may be input of Grounding DINO 3310. Text prompts 3120 may include words like "road". In this way, the bounding box of the road surface (also box prompt 3210) can be obtained. The next step is to prompt SAM 3320 with the output of Grounding DINO 3310. Due to the extensive pretraining process, SAM 3320 is able to distinguish between the road surface and even small/distant objects. The output of SAM 3320 may include one or more obstacle masks and road masks 3220. In some embodiments, RGB images 3110 may be input into SAM 3320 directly to obtain obstacle masks and road masks 3220.

Segmenters 3330: there may be several kinds of segmenters, such as the point cloud segmenter 3331 and the image instance segmenter 3332. Each kind of segmenter may process different input. For example, the input of the image instance segmenter 3332 may include RGB images 3110. The input of the point cloud segmenter 3331 may include point clouds 3130 which is received from the second sensing module 120 (e.g., LiDAR). Point clouds 3130 may include $PC_1$ to $PC_n$.

In some embodiments, the output of the point cloud segmenter 3331 may be one or more ground PC (point clouds) 3230 after inputting point clouds. The output of the image instance segmenter 3332 may be one or more instance masks 3240 after inputting RGB images 3110. The one or more instance masks 3240 may refer to one or more objects on the road. Point clouds 3130 may also be used directly in the following unsupervised method without segmentation. In some embodiments, the segmentation may be achieved by the clustering method.

Unsupervised method: the output from the above two methods (foundational models and segmenters) and point clouds may be input of the unsupervised method. In some embodiments, the output of foundational models may include one or more obstacles and road masks 3220. The output of segmenters may include one or more ground PC 3230 and instance masks 3240. These output and point clouds 3130 can be input to an unsupervised 3D detector 3340. The output of the unsupervised 3D detector 3340 can be a 3D bounding box 3250 for each obstacle. For example, the unsupervised 3D detector 3340 may perform clustering, combining, unifying or other operations based on its input to generate the 3D bounding box 3250.

This integrated approach ensures that the system can accurately identify obstacles by leveraging both visual and depth information, enhancing the safety and reliability of autonomous driving systems.

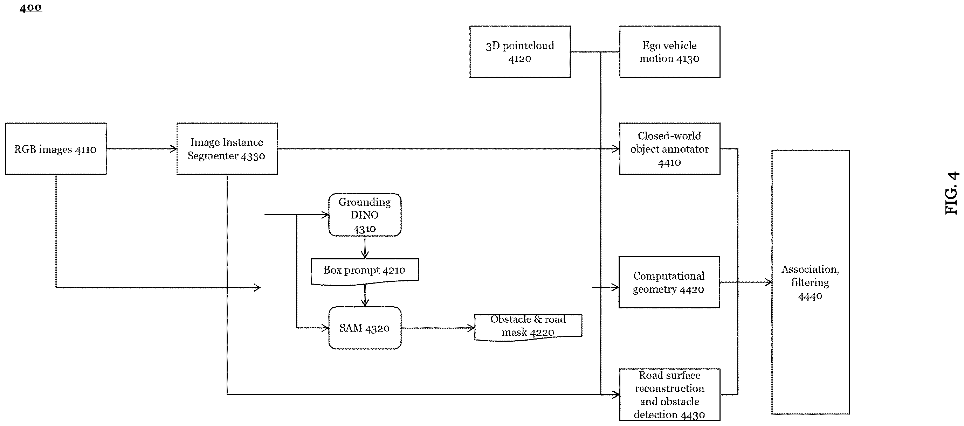

FIG. 4 is a schematic diagram of an exemplary obstacle detection method functional separation according to some embodiments of the present disclosure. The system 100, especially the processing module 130, may contain blocks shown in FIG.4. The input may come from two sources: RGB images 4110 and 3D point clouds 4120. RGB images 4110 may be obtained from the first sensing module (e.g., camera). 3D point clouds 4120 may be obtained from the second sensing module (e.g., LiDAR). In some embodiments, 3D point clouds 4120 may be provided with ego vehicle motion 4130. The ego vehicle motion 4130 can be computed using the LiDAR measurements. The ego vehicle motion 4130 may be used for motion compensation of the 3D point clouds. In some embodiments, RGB images 4110 may be processed by the image instance segmenter 4330 and foundational models. The image instance segmenter 4330 may generate instance masks for possible obstacle. And the foundational models (e.g., Grounding DINO 4310 and SAM 4320) may generate obstacle masks and road masks 4220. After processing the RGB images 4110 and 3D point clouds 4130, the output (processed data) may work as input of the unsupervised method to determine an obstacle. According to the functional separation in FIG. 4, three kinds of path may be included in the unsupervised method for obstacle detection.

(1) Closed world object annotator 4410: LiDAR point segmentation can be used to detect per frame ground points. Then, the per frame point cloud can be segmented into clusters after removing the detected ground points. The following methods can be used in combination for segmenting into clusters: custom unsupervised method on every region, DBSCAN in the distant region, supervised 3D object detection neural network, and unsupervised algorithm to synthesize the above. These clusters can be matched and tracked in consecutive frames, resulting in an aggregated point cloud for each object. These objects may appear in the perceived world for their whole lifetime and may be usually seen from different viewpoints by the LiDAR. With the help of the output of a conventional image segmentation NN (such as Mask2Former), these objects can be classified into a predefined list of categories. In this way, closed-set object detection can be executed. The other unknown tracked objects may be used for further analysis and open-world detection. This further analysis results in unknown objects can be kept based on the following properties: position relative to the road, geometric properties (extent) and time properties (has a long enough lifetime). The removed ground points can be also classified with the classical image segmentation model as road and non-road clusters.

(2) Computational geometry 4420: the points of the LiDAR frames (after motion compensations) can be projected back to the closest RGB image in time. The projected LiDAR points belonging to the obstacle masks computed by foundational models can determine candidate clusters in the point cloud frame. These clusters can be analyzed and filtered to suppress false positive detections. Analyzing and filtering can be made based on geometry: too large and too small objects are potentially misclassifications, and inconsistent, unstable detections are filtered. The filtered clusters can be used as input for the matching-tracking method mentioned in (1) to obtain tracked objects.

(3) Road surface reconstruction and obstacle detection 4430: with the help of the extracted road surface data computed in (1), a world model of the road can be built using the road points of all the LiDAR frames. Furthermore, out-of-distribution clusters on the road surface can be built using statistical data analysis. The method may include processing the points locally and with their neighborhood, fitting non-linear plane, considering deviation, thresholding.

Furthermore, a post-process step may be needed since the tracked objects on the road surface can be detected from several sources (e.g., path (1) to path (3)). This post-process step may include a statistical postprocessing, where the detections coming from the three different sources are combined, and unified. In some embodiments, the post processing may include associating and filtering the detections coming from these sources 4440. This post-process step can be responsible for an entity resolution method to handle multiple detections found by different methods. As a result, 3D bounding boxes for closed-set categories and unknown general obstacles can be output in an offline manner utilizing past and future measurements.

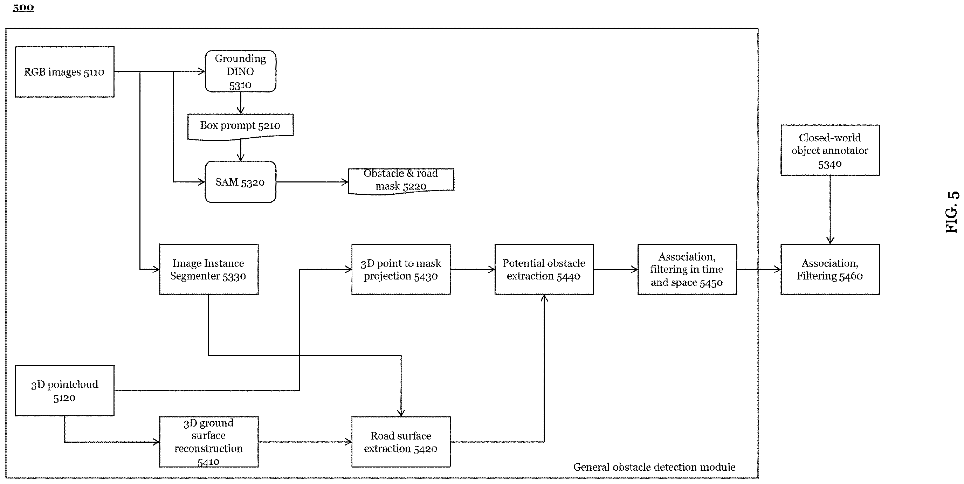

FIG. 5 is a block diagram illustrating an exemplary general obstacle detection module according to some embodiments of the present disclosure. The system 100, especially the processing module 130, may contain the module shown in FIG. 5. The obstacle detection module may contain the following sub-modules.

RGB image 5110 input: the sub-module can receive RGB images 5110 from the first sensing module (e.g., camera). RGB images 5110 can provide visual information about the surrounding environment.

Grounding DINO 5310: The Grounding DINO 5310 can process the RGB images. Grounding DINO 5310 can be used for outputting the 2D bounding box of the road surface, which is further utilized by the Segment Anything Model (SAM) 5320 as a prompt. In some embodiments, a text prompt, such as "road", can be provided to Grounding DINO 5310. It can perform the fine-grained alignment between vision and text, resulting in a promotable object detector.

SAM 5320: due to the extensive pretraining process, SAM 5320 is able to distinguish between the road surface and even small/distant objects. Thus, SAM 5320 can take the box prompt 5210 from Grounding DINO 5310 and/or RGB images 5110 to generate obstacle masks and road surface masks 5220. In some embodiments, obstacle masks may include holes in the road surface masks.

Image instance segmenter 5330: RGB images 5110 can be further processed by the image instance segmenter 5330 to generate instance masks. Instance masks can identify and segment individual objects within the images.

3D point cloud 5120 input: the sub-module can receive 3D point clouds 5120 from the second sensing module (e.g., LiDAR). 3D point clouds 5120 can provide depth information of the surrounding environment, which helps accurate obstacle detection.

3D ground surface reconstruction 5410: it can process the point clouds 5120 to identify and reconstruct the ground surface. In some embodiments, the sub-module can determine ground points and separate ground points from non-ground points.

Road surface extraction 5420: it can extract the road surface from the processed point clouds. Specifically, the sub-module can classify ground points into road points and non-road points, and build the aggregated road model based on road points. In some embodiments, road surface extraction can also process image instances from the image instance segmenter, which can enhance the accuracy and robustness of road surface detection.

3D point to mask projection 5430: the sub-module can construct the mapping relation between the 3D point cloud and 2D road mask. Specifically, the points can be projected back to the closest RGB image in time. The projected points belonging to the obstacle masks computed by foundational models can determine the set of overlapping clusters.

Potential obstacle extraction 5440: the sub-module can extract potential obstacles based on data generated from 3D point to mask projection and road surface extraction. Specifically, the sub-module can cluster non-ground points to obtain non-ground clusters. Potential obstacle extraction can detect overlapping regions between obstacle masks generated by foundational models and 3D point clouds, and cluster overlapping regions to obtain overlapping clusters. And it can also detect abnormal clusters based on the aggregated road model. Non-ground clusters, overlapping clusters, and abnormal clusters may be potential obstacles.

Association, filtering in time and space 5450:

the potential obstacles are associated and filtered over time and space to improve detection. In some embodiments, the potential obstacles may be combined and unified. The sub-module can help reducing false positives.

Closed-world object annotators 5340: some potential obstacles may be in known categories. The sub-module can use the closed-world model to annotate known objects. With the help of the output of a conventional image segmentation NN (such as Mask2Former), known objects can be classified into a predefined list of categories.

Association, filtering 5460: the sub-module can perform associating and filtering on the detected obstacles to generate accurate 3D bounding boxes. These bounding boxes are able to represent the precise location and size of the detected obstacles.

It should be noted that the above description is merely provided for the purposes of illustration, and not intended to limit the scope of the present disclosure. For persons having ordinary skill in the art, multiple variations and modifications may be made under the teachings of the present disclosure. However, those variations and modifications do not depart from the scope of the present disclosure.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure, and are within the spirit and scope of the exemplary embodiments of this disclosure.

Moreover, certain terminology has been used to describe embodiments of the present disclosure. For example, the terms "one embodiment," "an embodiment," and/or "some embodiments" mean that a particular feature, structure or characteristic described in connection with the embodiment is included in at least one embodiment of the present disclosure. Therefore, it is emphasized and should be appreciated that two or more references to "an embodiment" or "one embodiment" or "an alternative embodiment" in various portions of this specification are not necessarily all referring to the same embodiment. Furthermore, the particular features, structures or characteristics may be combined as suitable in one or more embodiments of the present disclosure.

Further, it will be appreciated by one skilled in the art, aspects of the present disclosure may be illustrated and described herein in any of a number of patentable classes or context including any new and useful process, machine, manufacture, or composition of matter, or any new and useful improvement thereof. Accordingly, aspects of the present disclosure may be implemented entirely hardware, entirely software (including firmware, resident software, micro-code, etc.) or combining software and hardware implementation that may all generally be referred to herein as a "unit", "module" or "system". Furthermore, aspects of the present disclosure may take the form of a computer program product embodied in one or more computer readable media having computer readable program code embodied thereon.

Furthermore, the recited order of processing elements or sequences, or the use of numbers, letters, or other designations, therefore, is not intended to limit the claimed processes and methods to any order except as may be specified in the claims. Although the above disclosure discusses through various examples what is currently considered to be a variety of useful embodiments of the disclosure, it is to be understood that such detail is solely for that purpose, and that the appended claims are not limited to the disclosed embodiments, but, on the contrary, are intended to cover modifications and equivalent arrangements that are within the spirit and scope of the disclosed embodiments. For example, although the implementation of various components described above may be embodied in a hardware device, it may also be implemented as a software only solution, e.g., an installation on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim. Rather, claimed subject matter may lie in less than all features of a single foregoing disclosed embodiment.

## Claims

1. A method for obstacle detection, comprising

   receiving, by a processing module, first road information from a first sensing module;
   determining, by the processing module, a set of obstacle masks based on the first road information by applying a self-supervised method;
   receiving, by the processing module, second road information from a second sensing module;
   determining, by the processing module, a set of clusters based on the second road information by applying a clustering method; and
   determining, by the processing module, an obstacle based on the set of obstacle masks and the set of clusters.

**2.** The method according to claim 1, wherein the first sensing module comprises an imaging sensor and/or the second sensing module comprises a sensor with depth information.

**3.** The method according to claim 1, wherein the determining, by the processing module, a set of obstacle masks based on the first road information by applying a self-supervised method comprises:

generating a road surface mask based on the first road information;
detecting a set of discontinuous regions on the road surface mask; and
determining the set of obstacle masks based on the set of discontinuous regions.

**4.** The method according to claim 3, further comprising: when a particular discontinuous region of the set of discontinuous regions is not covered as a whole by the road surface mask, identifying a boundary of the particular discontinuous region.

**5.** The method according to any of claims 1 to 4, wherein the set of clusters comprises a set of non-ground clusters and a set of ground clusters and wherein the method comprises:

determining the set of ground clusters based on the second road information;
removing the set of ground clusters from the second road information to obtain remaining second road information;
clustering the remaining second road information to obtain the set of non-ground clusters;
determining a set of overlapping clusters based on the remaining second road information and the first road information;
determining a known obstacle candidate and an unknown obstacle candidate based on the set of non-ground clusters and the set of overlapping clusters by applying a closed-world model;
determining a stationary obstacle candidate by building an aggregated road model based on the set of ground clusters; and
determining the obstacle based on the known obstacle candidate, the unknown obstacle candidate and the stationary obstacle candidate.

**6.** The method according to claim 5, wherein the determining a set of overlapping clusters based on the remaining second road information and the first road information comprises:

applying motion compensation to the remaining second road information;
constructing the mapping relation between the first road information and the remaining second road information

detecting a set of overlapping regions between the set of obstacle masks and the remaining second road information; and

clustering a set of overlapping regions to obtain the set of overlapping clusters.

**7.** The method according to claim 5, wherein the determining a known obstacle candidate and an unknown obstacle candidate based on the set of non-ground clusters and the set of overlapping clusters by applying a closed-world model comprises: distinguishing between the known obstacle candidate and the unknown obstacle candidate.

**8.** The method according to any of claims 5 to 7, wherein the determining a stationary obstacle candidate by building an aggregated road model based on the set of ground clusters comprises:

classifying the set of ground clusters into a set of road clusters and a set of non-road clusters by applying an image segmentation model;
building an aggregated road model based on the set of road clusters and the road surface mask;
detecting a set of abnormal clusters based on the aggregated road model; and
determining the stationary obstacle candidate based on the set of abnormal clusters.

**9.** The method according to one of claims 5 to 8, wherein the determining the obstacle based on the known obstacle candidate, the unknown obstacle candidate and the stationary obstacle candidate comprises: combining and/or unifying the known obstacle candidate, the unknown obstacle candidate, and the stationary obstacle candidate to obtain the obstacle.

**10.** The method according to any of claims 1 to 8, further comprising:
generating a 3D bounding shape for the obstacle, wherein the generation is based on a position property, and/or geometry property, and/or a time property of the obstacle.

**11.** A system for obstacle detection, comprising:

a first sensing module configured to generate first road information;
a second sensing module configured to generate second road information; and
a processing module, wherein the processing module is configured to:

receive first road information from a first sensing module;
determine a set of obstacle masks based on the first road information by applying a self-supervised method;
receive second road information from a second sensing module;
determine a set of clusters based on the second road information by applying a clustering method; and
determine an obstacle based on the set of obstacle masks and the set of clusters.

12. The system according to claim 11, wherein the processing module is further configured to:

determine a set of ground clusters based on the second road information;
remove the set of ground clusters from the second road information to obtain remaining second road information;
cluster the remaining second road information to obtain a set of non-ground clusters;
determine a set of overlapping clusters based on the remaining second road information and the first road information;
determine a known obstacle candidate and an unknown obstacle candidate based on the set of non-ground clusters and the set of overlapping clusters by applying a closed-world model;
determine a stationary obstacle candidate by building an aggregated road model based on the set of ground clusters; and
determine the obstacle based on the known obstacle candidate, the unknown obstacle candidate and the stationary obstacle candidate.

13. The system according to claim 12, wherein the processing module is further configured to apply an open world model on the unknown obstacle candidate.

**100**

First Sensing Module — 110

Second Sensing Module — 120

Processing Module — 130

Storage Module — 140

Network Module — 150

FIG. 1

**200**

Receive first road information from a first sensing module — 210

Determine a set of ground clusters based on the second road information — 220

Receive second road information from a second sensing module — 230

Determine a set of clusters based on the second road information by applying a clustering method — 240

Determine an obstacle based on the set of obstacle masks and the set of clusters — 250

FIG. 2

FIG. 3

**400**

FIG. 4

FIG. 5

500

General obstacle detection module

RGB images 5110

3D pointcloud 5120

Grounding DINO 5310

Box prompt 5210

SAM 5320

Obstacle & road mask 5220

Image Instance Segmenter 5330

3D ground surface reconstruction 5410

Road surface extraction 5420

3D point to mask projection 5430

Potential obstacle extraction 5440

Association, filtering in time and space 5450

Closed-world object annotator 5340

Association, filtering 5460

18

**EUROPEAN SEARCH REPORT**

Application Number

EP 24 18 8677

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RUIYANG ZHANG ET AL: "Approaching Outside: Scaling Unsupervised 3D Object Detection from 2D Scene", ARXIV.ORG, CORNELL UNIVERSITY LIBRARY, 11 July 2024 (2024-07-11), XP091815883, 201 OLIN LIBRARY CORNELL UNIVERSITY ITHACA, NY 14853 | 1-4,10, 11 | INV. G06V10/764 G06V10/80 G06V20/58 G06V10/762 |
| Y | * Section 1 * <br> * Section 3.1 * <br> * figure 2 * <br> ----- | 5-9,12, 13 | |
| Y | CN 116 051 818 A (UNIV CHONGQING) 2 May 2023 (2023-05-02) * the whole document * <br> ----- | 5-9,12, 13 | |
| A | CN 116 311 157 A (BEIJING SCIENCE & TECH CO THREE FAST ONLINE) 23 June 2023 (2023-06-23) * the whole document * <br> ----- | 1,2,5-7, 9,11-13 | |

TECHNICAL FIELDS SEARCHED (IPC)

G06V

The present search report has been drawn up for all claims

| Place of search | Date of completion of the search | Examiner |
|---|---|---|
| The Hague | 5 December 2024 | Moreno, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 8677

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2024

| Patent document cited in search report | | Publication date | Patent family member(s) | Publication date |
|---|---|---|---|---|
| CN 116051818 | A | 02-05-2023 | NONE | |
| CN 116311157 | A | 23-06-2023 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KIRILLOV, ALEXANDER et al.** Segment Anything. *2023 IEEE/CVF International Conference on Computer Vision*, 2023, 3992-4003